# EUROPEAN PATENT SPECIFICATION

(11) **EP 0 678 421 B1**
(45) Date of publication and mention of the grant of the patent: **20.08.1997**
(21) Application number: 95200746.6
(22) Date of filing: 24.03.1995
(51) Int. Cl.: B60R 5/00, E05C 17/04

(54) **Assembly of a container with closing cover fitting thereon, suitable for placing in the boot of a motor car**
Anordnung eines Behälters mit Deckel, geeignet zum Legen im Kofferraum eines Fahrzeugs
Assemblage d'un conteneur avec couvercle, apte pour être placé dans le coffre d'un véhicule

(30) Priority: 21.04.1994 NL 9400641
(43) Date of publication of application: 25.10.1995
(73) Proprietor: Netherlands Car B.V., 5708 HT Helmond (NL)
(72) Inventor: van Lieshout, Laurentius Antonius Josephus, NL-5731 JN Mierlo (NL)
(74) Representative: Timmers, Cornelis Herman Johannes

(56) References cited:
- DE-A- 2 140 164
- DE-A- 4 227 937
- DE-U- 9 204 261

## Description

The invention relates to an assembly of a container and closing cover, suitable for placing in the boot of a motor car.

Storing small articles tidily in the boot of a motor car is a problem which is almost as old as the motor car itself. There have been numerous attempts to overcome the problem of these articles lying around loose, by using commercially available crates or containers, with or without a cover, which are therefore not of a type which can be fixed in the boot.

Almost as old as the above problem are the problems encountered in transporting goods which will not fit into the boot of a motor car when the tailgate is closed. These problems arise particularly when items such as a bicycle, a surfboard, skis or large boxes are to be transported by car. In those cases the goods are usually covered fully or partially with a rug or old pieces of cloth, newspapers and the like, the tailgate is pulled down as far as possible with a clamping strap (clamping straps suitable for this are commercially available), and then one hopes for the best.

The object of the invention is to produce a single assembly which provides a solution to the two problems outlined above. This object is achieved according to the invention with an assembly which is designed in such a way that the cover, which is made of or coated with a yielding plastic, is provided with a central opening whose dimensions are adapted to the external dimensions of a part projecting from the tailgate of the car, a longitudinal groove is formed in the bottom face of the cover at such a distance from the central opening that, when the cover is placed on this lock mechanism part, the end edge of the tailgate falls into it, and the cover is of such a thickness that, when it is clamped between the tailgate and an article to be transported, movements of the tailgate are cushioned.

With the cover placed on the container, a closed unit which is very suitable for accommodating small articles is obtained. With the cover pushed onto the lock part, after fixing the tailgate by means of a clamping strap inserted through the opening into the cover part and engaging in the lock mechanism part, one obtains a protective element which rests resiliently on the large goods to be transported, and retains the latter without any danger of damage being caused to them. After use, the clamping strap is stored in the container, and the cover can be placed on the container.

The projecting part is preferably formed by the projecting part of the lock mechanism.

The opening, starting from the bottom face of the cover, is preferably formed by a first, narrowing part, passing into a second part which merges into the top face of the cover. In this case the widened lock mechanism part is accommodated in the first, widened part and the hook mechanism part of the lock mechanism fits tightly into the second part of the opening.

The cover is preferably elongate. Of course, this also means an elongate configuration for the container, which makes it possible to place the container in the boot between the wheel housing and the upright rear lip of the boot.

Further advantageous embodiments are described in claims 4 to 7.

The invention is explained with reference to the drawing, in which:
Figure 1 shows a perspective drawing of the assembly of container and cover;
Figure 2 shows a perspective top view of the cover;
Figure 3 shows a perspective bottom view of the cover;
Figure 4 shows an end view of the short end of the cover;
Figure 5 shows a cross-section of the cover;
Figure 6 shows the use of the cover for transportating a bulky article.

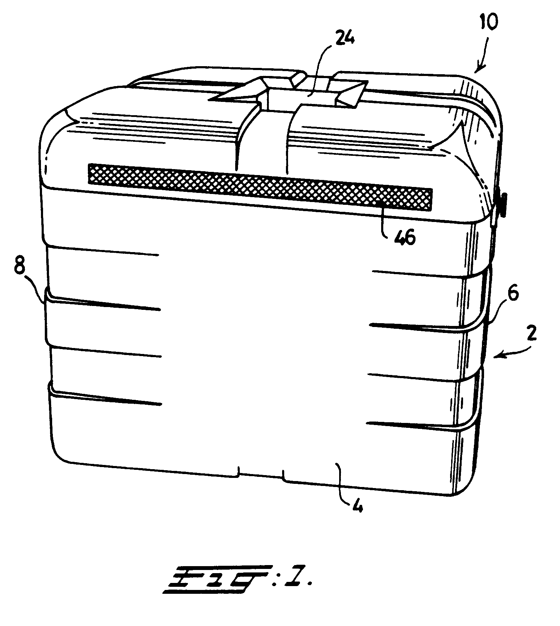

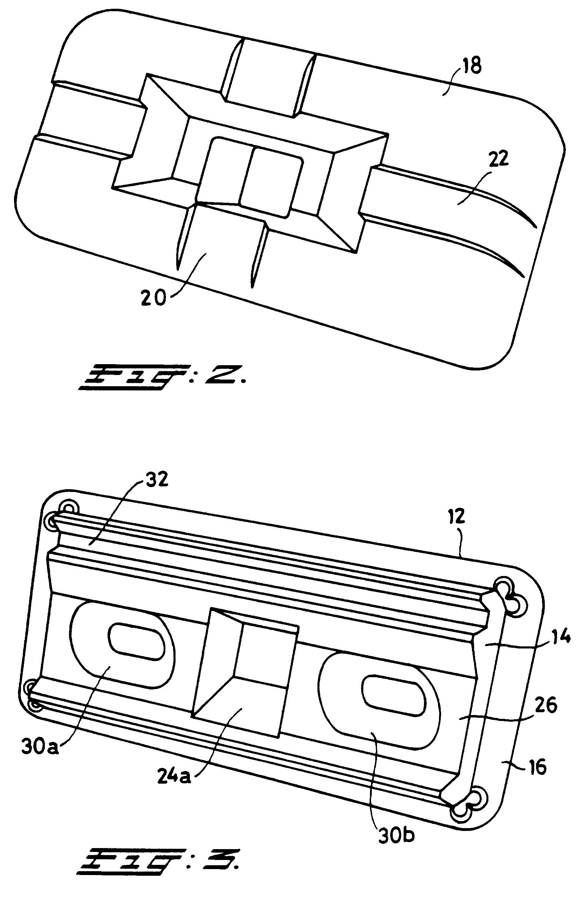

Figure 1 shows a prismatic, essentially elongate container 2 with the large front side 4 and the short end sides 6, 8; the cover 10 shown in Figures 2 - 5 fits on this container 2. Projecting from the bottom face 12 thereof is the ridge 14, which narrows relative to the edge boundaries of said bottom face, and which fits closely into the container 2 leaving free a circumferential edge 16. Recesses 20, 22 running in a cross shape are formed on the top face 18 of this cover, into which recesses fixing straps (not shown) fit.

A central opening 24 is formed in the cover 10, which is made of (or covered with) a yieldable plastic and, starting from the bottom face 26 of the ridge 14, said opening is stepped: there is a first part 24a which narrows from the bottom face 26 over the greater part of the height h of the cover 10, which part passes into a second part 24b with essentially uniform internal dimensions. The configuration is such that the cover 10 can be pushed with the opening 24a at the front around the part of a tailgate lock (not shown in the figures) on the tailgate, and preferably fits tightly around it.

This is, of course, the preferred embodiment; another suitable projecting part can also be used.

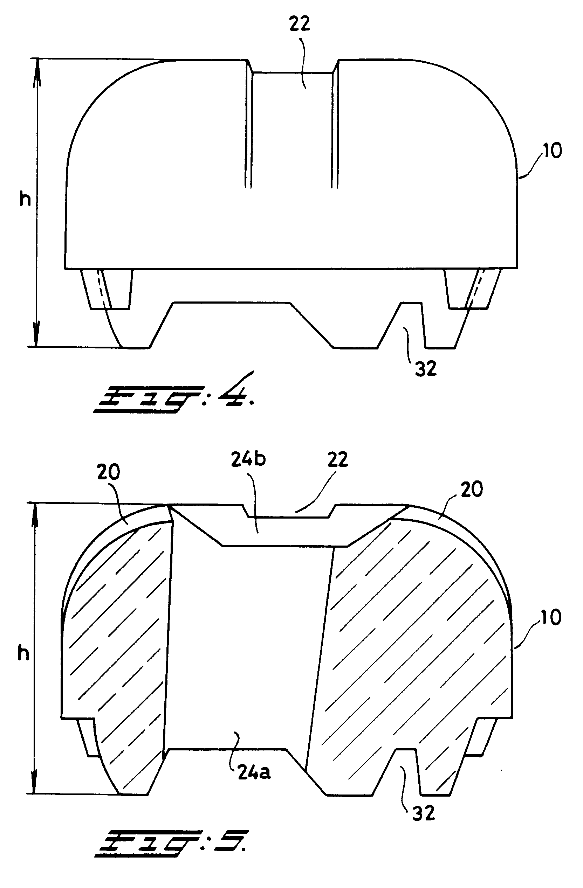

Figure 3 also shows that two shallow recesses 30a, 30b have been formed in the bottom face 26a of the ridge 14; with a limited height of container 2, this produces space in the cover 10 for accommodating the top ends of the tall bottles placed in the container 2. Moreover, a saving in material is achieved in this way. This detail is, of course, not essential for the invention.

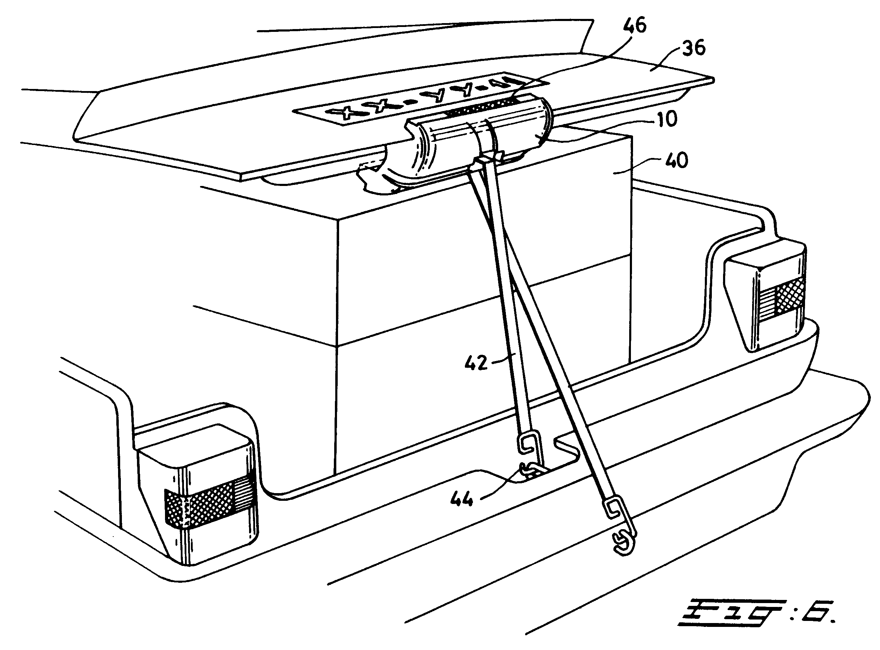

What is important is the groove 32 formed in the ridge 14 and running in the lengthwise direction of the cover. The purpose of said groove can be seen from Figure 6. This figure shows how, apart from the function of closing the container 2, the cover can be used for protecting bulky articles being transported in the boot of a motor car.

For this purpose, the cover 10 is pushed with the opening 24a, 24b around the lock mechanism part fixed to the tailgate, in such a way that the end edge 34 of the tailgate 36 comes to rest in the longitudinal groove 32, so that the cover 10 is fixed in such a way that it cannot rotate relative to the tailgate 36. When the tailgate 36 is now lowered, the cover 10 comes to rest against the top face 38 of a bulky article to be transported, for example the box 40 shown; by means of a (commercially available) clamping strap 42 which is fixed between the lock mechanism part present on the tailgate 36 and the lock mechanism part 44 present on the car body, the tailgate 36 is clamped against the article 40. The cover 10 is of such height h (see Figures 4, 5) that movements of the tailgate 36 are cushioned.

A strip of light-reflecting material 46 is preferably disposed on the cover 10, at such a point that it faces backwards when the cover is being used in the way shown in Figure 6.

Of course, the cover 10 can be used with the same effect when articles projecting beyond the boot, for example a bicycle or boards, have to be carried.

## Claims

1. Assembly of a container (2) and closing cover (10), suitable for placing in the boot of a motor car, **characterized in that** the cover (10), which is made of or coated with a yieldable plastic, is provided with a central opening (24) whose dimensions are adapted to the external dimensions of a part projecting from the tailgate (36) of the car, a longitudinal groove (32) is formed in the bottom face of the cover at such a distance from the central opening (24) that, when the cover is placed on this lock mechanism part, the end edge of the tailgate (36) falls into it, and the cover is of such a thickness that, when it is clamped between the tailgate (36) and an article (40) to be transported, movements of the tailgate are cushioned.

2. Assembly according to claim 1, **characterized in that** the projecting part is formed by the projecting part of the lock mechanism.

3. Assembly according to claim 1 or 2, **characterized in that** the cover opening (24), starting from the bottom face of the cover, is formed by a first, narrowing part (24a), passing into a second part (24b) which merges into the top face (18) of the cover.

4. Assembly according to claim 3, **characterized in that** the cover (10) is elongate.

5. Assembly according to any of claims 1 to 4, **characterized in that** a narrowed ridge (14), which fits closely into the container, leaving free a circumferential edge, projects from the bottom face of the cover.

6. Assembly according to any of claims 1 to 5, **characterized in that** the top face (18) of the cover is curved in a convex shape.

7. Assembly according to any of claims 1 to 6, **characterized in that** recesses (20, 22) running in a cross shape are formed in the top face (18), for accommodating a fixing band or strap.

8. Assembly according to any of claims 1 to 7, **characterized in that** light-reflecting material (46) is arranged on at least one of the side faces of the cover.

## Patentansprüche

1. Baueinheit aus einem Behälter (2) und einem Verschlußdeckel (10), die im Kofferraum eines Kraftfahrzeugs angeordnet werden kann,
**dadurch gekennzeichnet, daß** der Deckel (10), der aus einem nachgiebigen Kunststoff hergestellt oder damit beschichtet ist, mit einer mittigen Öffnung (24) versehen ist, deren Abmessungen an die äußeren Abmessungen eines von der Heckklappe (36) des Fahrzeugs vorstehenden Teils angepaßt sind, wobei in der Bodenfläche des Deckels eine Längsrille (32) in einem solchen Abstand von der mittigen Öffnung (24) ausgebildet ist, daß die Endkante der Heckklappe (36) dann, wenn der Deckel an ihrem Schloßmechanismusteil angeordnet wird, in sie fällt, wobei der Deckel eine Dicke besitzt, derart, daß Bewegungen der Heckklappe gedämpft werden, wenn der Deckel zwischen die Heckklappe (36) und einen zu transportierenden Gegenstand (40) geklemmt ist.

2. Baueinheit nach Anspruch 1, **dadurch gekennzeichnet, daß** das vorstehende Teil durch den vorstehenden Teil des Schloßmechanismus gebildet ist.

3. Baueinheit nach Anspruch 1 oder 2, **dadurch gekennzeichnet, daß** die Deckelöffnung (24) beginnend an der Bodenfläche des Deckels durch einen ersten, schmalen Teil (24a) gebildet ist, der in einen zweiten Teil (24b) übergeht, der seinerseits in die obere Fläche (18) des Deckels mündet.

4. Baueinheit nach Anspruch 3, **dadurch gekennzeichnet, daß** der Deckel (10) langgestreckt ist.

5. Baueinheit nach irgendeinem der Ansprüche 1 bis 4, **dadurch gekennzeichnet, daß** von der Bodenfläche des Deckels eine schmale Rippe (14) vorsteht, die in den Behälter eng eingepaßt wird und dabei eine Umfangskante freiläßt.

6. Baueinheit nach irgendeinem der Ansprüche 1 bis 5, **dadurch gekennzeichnet, daß** die obere Fläche (18) des Deckels konvex gekrümmt ist.

7. Baueinheit nach irgendeinem der Ansprüche 1 bis 6, **dadurch gekennzeichnet, daß** in der oberen Fläche (18) Aussparungen (20, 22), die in Querschnittsrichtung verlaufen, ausgebildet sind, um ein Befestigungsband oder einen Befestigungsgurt aufzunehmen.

8. Baueinheit nach irgendeinem der Ansprüche 1 bis 7, **dadurch gekennzeichnet, daß** auf wenigstens einer der Seitenflächen des Deckels ein lichtreflektierender Werkstoff (46) angebracht ist.

## Revendications

1. Assemblage d'un conteneur (2) et d'un couvercle de fermeture (10), adapté à être placé dans le coffre d'un véhicule à moteur, caractérisé en ce que le couvercle (10), qui est réalisé en ou revêtu avec un plastique fluable, est pourvu d'un ouverture centrale (24), dont les dimensions sont adaptées aux dimensions externes d'une partie se projetant à partir du hayon (36) de la voiture, une rainure longitudinale (32) est formée dans la face de fond du couvercle à une distance telle par rapport à l'ouverture centrale (24) que, lorsque le couvercle est placé sur cette partie de mécanisme de verrouillage, le bord d'extrémité du hayon (36) tombe dans celle-ci et le couvercle est d'une épaisseur telle que lorsqu'il est serré entre le hayon (36) et un article (40) à transporter, les mouvements du hayon sont amortis.

2. Assemblage selon la revendication 1, caractérisé en ce que la partie saillante est formée par la partie saillante du mécanisme de verrouillage.

3. Assemblage selon la revendication 1 ou 2, caractérisé en ce que l'ouverture du couvercle (24) en partant de la face de fond du couvercle, est formée par une première partie étroite (24a), passant dans une seconde partie (24b) qui aboutit dans la face supérieure (18) du couvercle.

4. Assemblage selon la revendication 3, caractérisé en ce que le couvercle (10) est allongé.

5. Assemblage selon l'une quelconque des revendications 1 à 4, caractérisé en ce qu'une nervure étroite (14) qui s'adapte étroitement dans le conteneur laissant un bord circonférentiel libre, fait saillie à partir de la face de fond du couvercle.

6. Assemblage selon l'une quelconque des revendications 1 à 5, caractérisé en ce que la face supérieure (18) du couvercle est courbée en une forme convexe.

7. Assemblage selon l'une quelconque des revendications 1 à 6, caractérisé en ce que des évidements (20, 22) s'étendant en forme de croix, sont formées dans la face supérieure (18) pour recevoir une bande ou une courroie de fixation.

8. Assemblage selon l'une quelconque des revendications 1 à 7, caractérisé en ce qu'un matériau réflecteur de lumière (46) est arrangé sur au moins une des faces latérales du couvercle.
